(19) Europäisches Patentamt / European Patent Office / Office européen des brevets

(11) **EP 4 290 104 A1**

(12) **EUROPEAN PATENT APPLICATION**
published in accordance with Art. 153(4) EPC


(43) Date of publication:
**13.12.2023 Bulletin 2023/50**

(21) Application number: **22749529.8**

(22) Date of filing: **24.01.2022**

(51) International Patent Classification (IPC):
***F16J 15/10** (2006.01)* ***H01M 50/183** (2021.01)*

(52) Cooperative Patent Classification (CPC):
**F16J 15/10; H01M 10/052; H01M 10/0566; H01M 50/183; H01M 50/184; H01M 50/193; H01M 50/198;** Y02E 60/10

(86) International application number:
**PCT/JP2022/002408**

(87) International publication number:
**WO 2022/168654 (11.08.2022 Gazette 2022/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.02.2021 JP 2021017472**



(71) Applicant: **Daikin Industries, Ltd.**
**Osaka-Shi, Osaka 530-0001 (JP)**

(72) Inventors:
- **USHIJIMA, Takeru**
  **Osaka-shi, Osaka 530-0001 (JP)**
- **YANAGIGUCHI, Tomihiko**
  **Osaka-shi, Osaka 530-0001 (JP)**
- **TSUDA, Hayato**
  **Osaka-shi, Osaka 530-0001 (JP)**

(74) Representative: **Hoffmann Eitle**
**Patent- und Rechtsanwälte PartmbB**
**Arabellastraße 30**
**81925 München (DE)**


(54) **SEALING MEMBER AND BATTERY**


(57) Provide is a sealing member that exhibits both the effect of suppressing permeation and leakage of an electrolytic solution and the effect of decreasing the incidence of damage to the sealing member.

A sealing member for a battery including a non-aqueous electrolytic solution; wherein a material constituting the sealing member comprises an elastic material; a compression rate R of the sealing member when attached is 50% or more; and the sealing member satisfies $Eb \geq a \times \beta^b$, where Eb is an elongation at break of the material constituting the sealing member as measured in accordance with JIS K 6251, β is a cross-sectional aspect ratio, a = 6.919 × R - 2.066, and b = 2.278 × R - 1.767.


Figure9

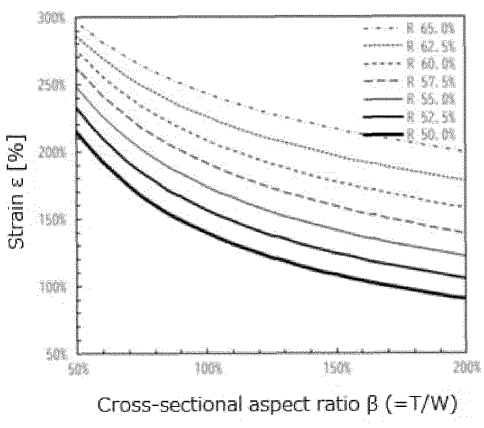


EP 4 290 104 A1

## Description

### Technical Field

The present disclosure relates to a sealing member and a battery.

### Background Art

It is necessary to seal batteries including a non-aqueous electrolytic solution at their electrode section, and a sealing member is used for such sealing. The sealing member functions to suppress leakage and permeation of the non-aqueous electrolytic solution in the battery (Patent Literature 1).

Patent Literature 2 discloses that such a sealing member in a compressed state is attached in a cylindrical battery.

### Citation List

### Patent Literature

Patent Literature 1: Japanese Patent Laid-Open No. 2001-126684
Patent Literature 2: Japanese Patent Laid-Open No. 2000-30675

### Summary of Invention

### Technical Problem

An object of the present disclosure is to provide a sealing member that exhibits both the effect of suppressing permeation and leakage of the electrolytic solution and the effect of decreasing the incidence of damage to the sealing member.

### Solution to Problem

The present disclosure relates to a sealing member for a battery including a non-aqueous electrolytic solution,

wherein a material constituting the sealing member comprises an elastic material,
a compression rate R of the sealing member when attached is 50% or more, and
the sealing member satisfies

$$Eb \geq a \times \beta^b$$

where Eb is an elongation at break of the material constituting the sealing member as measured in accordance with JIS K 6251, $\beta$ is a cross-sectional aspect ratio, $a = 6.919 \times R - 2.066$, and $b = 2.278 \times R - 1.767$.

The above sealing member preferably has a circular ring shape with a rectangular cross-section.

T preferably satisfies $0.4\ mm \leq T \leq 3.5\ mm$.

W preferably satisfies $0.4\ mm \leq W \leq 3.5\ mm$.

The compression rate is preferably 52% or more.

The elastic material is preferably a fluoroelastomer.

The elastic material is preferably an elastomer containing a vinylidene fluoride unit(s).

The sealing member of the present disclosure preferably satisfies

$$3.0 \geq a \times \beta^b$$

where $a = 6.919 \times R - 2.066$ and $b = 2.278 \times R - 1.767$.

The battery including a non-aqueous electrolytic solution is preferably a lithium-ion battery.

The battery is preferably a rectangular battery.

The present disclosure also relates to a battery including a non-aqueous electrolytic solution, the battery comprising any of the sealing members described above.

Advantageous Effects of Invention

The sealing member of the present disclosure is excellent in terms of suppressing permeation and leakage of the electrolytic solution as well as decreasing the incidence of damage to the sealing member. Because both these performances are delivered, the sealing member can be suitably used in a battery including a non-aqueous electrolytic solution.

Brief Description of Drawings

[Figure 1] Figure 1 is a schematic diagram showing an example of a rectangular battery.
[Figure 2] Figure 2 is a schematic diagram showing an example of an electrode.
[Figure 3] Figure 3 is a schematic diagram showing an example of a sealing member of the present disclosure.
[Figure 4] Figure 4 is a schematic diagram showing a cross-sectional view of an example of a sealing member of the present disclosure.
[Figure 5] Figure 5 is a cross-sectional view showing an example of a sealed state according to the present disclosure.
[Figure 6] Figure 6 is a graph showing the relationship between the compression rate of the sealing member and the amount of permeation.
[Figure 7] Figure 7 is a schematic diagram showing a cross-sectional view of an example of simulation for calculating the maximum strain of a sealing member.
[Figure 8] Figure 8 is a graph showing the relationship between the maximum strain in the sealing member surface and the compression rate by simulation.
[Figure 9] Figure 9 is a graph showing the relationship between the maximum strain in the sealing member surface and the cross-sectional aspect ratio by simulation.

Description of Embodiments

Hereinafter, the present disclosure will be described in detail.
As mentioned above, an important function of the sealing member in a battery including a non-aqueous electrolytic solution is to suppress permeation of the electrolytic solution.
Further, the member should be tightly attached, and accordingly, the sealing member is generally made of elastic material such as an elastomer. Part of components of the electrolytic solution may permeate through such a sealing member, so that the electrolytic solution may be decreased after long-term use. The decrease of the electrolytic solution causes deterioration of battery performance. Therefore, it is necessary to suppress the permeation of such components of the electrolytic solution. In particular, since secondary batteries are used for a long period of time, the suppression of such permeation is an important issue.
It has been known that the permeation of components of the electrolytic solution can be suppressed by attaching the sealing member in a compressed state. However, the details thereof have not been examined. In addition, in a case where the sealing member in a compressed state is attached, the internal strain in the sealing member is high, and the problem is that the sealing member is prone to cracking or other damage. Thus, it is an important issue to control the permeability in the sealing member and also to prevent cracking. Even if the material used and the compression rate are the same, the shape of the sealing member will affect the susceptibility to cracking and damage. Therefore, computer simulations were conducted to study the shape of the sealing member that can withstand the compression rate as mentioned above. Further, the obtained results have revealed the conditions for the shape of the sealing member that is less prone to cracking. Furthermore, it has been checked whether these conditions were appropriate or not by actually producing the sealing members and measuring their physical properties.
As described above, the present disclosure has been completed by a sealing member having a shape such that the incidence of damage can be decreased even when the compression rate of the sealing member is within a specific range, and that both reduction in the amount of permeation of the electrolytic solution and a physical strength can be achieved.
Specifically, the present disclosure relates to a sealing member for a battery including a non-aqueous electrolytic solution, wherein the material constituting the sealing member comprises an elastic material, the compression rate R of the sealing material when attached is 50% or more; and the sealing member satisfies

$$Eb \geq a \times \beta^{b}$$

where Eb is the elongation at break of the material constituting the sealing member as measured in accordance with JIS K 6251, $\beta$ is the cross-sectional aspect ratio, a = 6.919 $\times$ R - 2.066, and b = 2.278 $\times$ R - 1.767.

This will be described in detail below one by one.

(Battery Including Sealing Member of Present Disclosure)

The sealing member of the present disclosure is a sealing member used for a battery including a non-aqueous electrolytic solution. The sealing member of the present disclosure can suppress the permeation of the electrolytic solution as mentioned above, and this feature allows for use in any battery with a non-aqueous electrolytic solution.

Specific examples of the battery include a lithium-ion battery, a lithium battery, a lithium-sulfur battery, a sodium ion battery, and a nickel-hydrogen battery. Among them, the sealing member is particularly suitable for use in a lithium-ion battery.

The battery in the present disclosure includes a non-aqueous electrolytic solution. Specifically, the sealing member of the present disclosure exhibits the effect of suppressing permeation of components of the electrolytic solution, and therefore, the sealing member of the present disclosure exhibits an excellent effect when used in a battery with such a non-aqueous electrolytic solution.

The composition of the electrolyte contained in the battery case will be described. The electrolyte in this embodiment is, for example, a lithium salt such as $LiPF_6$. For example, an appropriate amount of lithium salt such as $LiPF_6$ can be dissolved in a non-aqueous electrolytic solution such as a mixed solvent of diethyl carbonate and ethylene carbonate, and the resultant can be used as an electrolytic solution. The electrolytic solution is injected and sealed to provide a battery according to this embodiment.

Rectangular and cylindrical lithium-ion batteries have been known, and any of them can be used.

Figure 1 shows an example of a rectangular lithium-ion battery. In the rectangular lithium-ion battery, the battery components are mounted in a rectangular housing, and the electrodes are placed through two through-holes on the top face in Figure 1. At that time, the sealing member of the present disclosure is attached together with each electrode to prevent permeation and leakage of the non-aqueous electrolytic solution inside the housing. Therefore, in this case, two sealing members are used per battery.

On the other hand, a cylindrical lithium-ion battery needs the sealing member when a positive electrode is attached through a through-hole created in the cylindrical container. In this case, one sealing member is used per battery. However, a cylindrical lithium-ion battery generally has a small amount of non-aqueous electrolytic solution present in the battery. Thus, even in the case where the absolute amount of permeation is small, the decrease in battery performance is large. Hence, it is considered that the permeability must be equal to or higher than that of the above-mentioned rectangular lithium-ion battery. In view of the above, the sealing member of the present disclosure, when applied to a cylindrical lithium-ion battery, also exerts an excellent effect.

(Compression Rate R)

In the present disclosure, the sealing member is attached at a compression rate of 50% or more. Attaching a sealing member at a high compression rate decreases the permeability. In this context, experiments were performed for examination. In this disclosure, the compression rate R is the ratio of the dimensional change, from the thickness before the compression to that after the compression, of the sealing member in the compression direction, to the dimensional value of the thickness before the compression. When it is expressed in percent (%), the numerical value of the ratio should be multiplied by 100.

The compression rate is preferably 50% or more, more preferably 52% or more, and still more preferably 54% or more. The compression rate is preferably 80% or less, more preferably 70% or less, and still more preferably 65% or less. The upper limit of the compression rate is not limited. However, the application of compression rate at a certain level in the assembly process may cause defects due to deformation of the battery lid and other peripheral members of the battery. Therefore, the above range is preferable as a practically feasible range. The rationale for such a numerical range will be provided.

Batteries (especially, secondary batteries) should have a durability of 100,000 hours. In order to achieve this, the amount of permeation of the electrolytic solution after 1,000,000 hours should be less than 10%. Meanwhile, a typical rectangular lithium-ion battery contains about 100 g of an electrolytic solution. Therefore, the amount of permeation of the electrolytic solution over 1,000 hours should be less than 0.05 g.

The compression rate to achieve such an amount of permeation has been examined. The experiments have revealed the relationship between the compression rate and the amount of permeation of the electrolytic solution at

60°C over 1,000 hours. The experiments have been conducted in the following manner.

Like the component configuration of the electrode section in a battery, the apparatus includes a container containing an electrolytic solution and an electrode-like cap for sealing the outlet of the container together with a sealing member. The sealing member is compressed between the container and the cap at a predetermined compression rate in the thickness direction, and they are then held in that state for a certain period of time. The container and the cap have sufficient rigidity against the sealing member so as to prevent deformation during implementation, and the non-aqueous electrolytic solution does not permeate therethrough. Thus, an aluminum alloy, which is actually used for batteries, has been used for the container and the cap. The amount of permeation was determined by measuring the change in the total weight of the apparatus over time.

In the experiments, a VdF-based fluoroelastomer (polymer composition: VdF/TFE/HFP = 50/20/30 mol%; iodine content: 0.5 mass%) was used as an elastic material. The elastomer used here was obtained by molding a material having the following formulation by the following molding procedure.

(Formulation)

The composition was prepared by kneading, with an open roll, 100 parts by mass of the above VdF-based fluoroelastomer, 20 parts by mass of MT carbon, 4 parts by mass of triallyl isocyanurate (TAIC), and 1.5 parts by mass of organic peroxide (2,5-dimethyl-2,5-bis(t-butylperoxy)hexane).

(Molding Procedure)

The above composition was placed in a mold, pressurized by a compression molding machine, and subjected to secondary vulcanization at 170°C for 10 minutes for molding to obtain a sealing member.

The sealing member produced has a circular ring shape with a rectangular cross-section. The outer diameter of the ring is 17.7 mm, T is 1.6 mm, and W is 1.75 mm.

Figure 2 shows the results.

As shown in Figure 2, experiments have revealed that the amount of permeation of the electrolytic solution over 1,000 hours can be 0.05 g or less by increasing the compression rate to 50% or more.

On the other hand, a higher compression rate also results in higher strain, which leads to cracking and damage. Therefore, the shape should be such that the incidence of cracking and damage can be decreased even when attached at a compression rate of 50% or more. Such a shape and the material constituting the sealing member are described in detail below.

(Material Constituting Sealing Member)

The sealing member of the present disclosure includes an elastic material. In other words, an elastic material is used to deliver performance as the sealing member. Examples of the elastic material include, but are not limited to, a polymer that is generally called an elastomer, or a crosslinked product thereof. In general, a crosslinked product of an elastomer is more preferred. A fluoroelastomer or a crosslinked product thereof is the most suitable as the elastic material since they have low permeability to components of the electrolytic solution. The crosslinked product may be an internally crosslinked product of an elastomer having a cross-linking group, or may be obtained from an elastomer in combination with a cross-linking agent.

Examples of the fluoroelastomer include a partial fluoroelastomer and a perfluoroelastomer. These are detailed below.

(Partial Fluoroelastomer)

The partial fluoroelastomer preferably contains a structural unit derived from at least one monomer selected from the group consisting of tetrafluoroethylene (TFE), vinylidene fluoride (VdF), and perfluoroethylenically unsaturated compounds represented by general formula: $CF_2$=CF-$Rf^a$ (where $Rf^a$ is -$CF_3$ or -O$Rf^b$ where $Rf^b$ is a $C_{1-5}$ perfluoroalkyl group) (e.g., hexafluoropropylene (HFP), perfluoro(alkylvinylether) (PAVE)), for example. The fluoroelastomer is preferably an elastomer containing a VdF or TFE unit among them.

More specific examples of the partial fluoroelastomer include a VdF-based fluoroelastomer, TFE/propylene (Pr)-based fluoroelastomer, TFE/Pr/VdF-based fluoroelastomer, ethylene (Et)/HFP-based fluoroelastomer, Et/HFP/VdF-based fluoroelastomer, or Et/HFP/TFE-based fluoroelastomer. Among them, a VdF-based fluoroelastomer, TFE/Pr-based fluoroelastomer, or TFE/Pr/VdF-based fluoroelastomer is more suitable because of their favorable heat aging resistance and oil resistance.

The VdF-based fluoroelastomer is a partial fluoroelastomer having a VdF unit. The VdF-based fluoroelastomer

preferably has the VdF unit in an amount of 20 mol% or more and 90 mol% or less, more preferably 40 mol% or more and 85 mol% or less, and still more preferably 45 mol% or more and 80 mol% or less, and particularly preferably 50 mol% or more and 80 mol% or less, based on the total moles of the VdF unit and the monomer unit(s) derived from the additional monomer(s).

The additional monomer(s) in the VdF-based fluoroelastomer is not limited as long as the monomer(s) is copolymerizable with VdF. For example, fluorine-containing monomers can be used.

The VdF-based fluoroelastomer is preferably at least one copolymer selected from the group consisting of VdF/HFP copolymers, VdF/TFE/HFP copolymers, VdF/CTFE copolymers, VdF/CTFE/TFE copolymers, VdF/PAVE copolymers, VdF/TFE/PAVE copolymers, VdF/HFP/PAVE copolymers, VdF/HFP/TFE/PAVE copolymers, VdF/TFE/Pr copolymers, VdF/Et/HFP copolymers, and VdF/$CH_2$=$CFCF_3$ copolymers. More preferred are those having at least one monomer selected from the group consisting of TFE, HFP, and PAVE as the additional monomer other than VdF.

Among them, the VdF-based fluoroelastomer is preferably at least one copolymer selected from the group consisting of VdF/HFP copolymers, VdF/TFE/HFP copolymers, VdF/$CH_2$=$CFCF_3$ copolymers, VdF/PAVE copolymers, VdF/TFE/PAVE copolymers, VdF/HFP/PAVE copolymers, and VdF/HFP/TFE/PAVE copolymers, and more preferably at least one copolymer selected from the group consisting of VdF/HFP copolymers, VdF/HFP/TFE copolymers, VdF/$CH_2$=$CFCF_3$ copolymers, and VdF/PAVE copolymers.

The VdF/PAVE copolymer has a VdF/PAVE ratio of preferably (65-90)/(35-10) (mol%).

In a preferable embodiment, the VdF/PAVE ratio is (50-78)/(50-22) (mol%).

The VdF/TFE/PAVE copolymer has a VdF/TFE/PAVE ratio of preferably (40-80)/ (3-40)/ (15-35) (mol%).

The VdF/HFP/PAVE copolymer has a VdF/HFP/PAVE ratio of preferably (65-90)/ (3-25)/ (3-25) (mol%).

The VdF/HFP/TFE/PAVE copolymer has a VdF/HFP/TFE/PAVE ratio of preferably (40-90)/(0-25)/(0-40)/ (3-35) (mol%) and more preferably (40-80)/(3-25)/(3-40)/(3-25) (mol%).

In the VdF/$CH_2$=$CFCF_3$ copolymer, the VdF/$CH_2$=$CFCF_3$ unit ratio is preferably (85-20)/(15-80) (mol%), and the amount of the additional monomer unit other than VdF or $CH_2$=$CFCF_3$ is preferably 0-50 mol% based on the total monomer units, and more preferably, the VdF/$CH_2$=$CFCF_3$ unit ratio is (80-20)/(20-80) in terms of mol%. In a preferable embodiment, the VdF/$CH_2$=$CFCF_3$ unit ratio is (78-50)/(22-50) (mol%).

Also, in the VdF/$CH_2$=$CFCF_3$ copolymer, the VdF/$CH_2$=$CFCF_3$ unit ratio is preferably (85-50)/(15-50) (mol%), and the amount of the additional monomer unit other than VdF or $CH_2$=$CFCF_3$ is preferably from 1 to 50 mol% based on the total monomer units. The additional monomer other than VdF or $CH_2$=$CFCF_3$ is preferably a monomer exemplified as the additional monomer in the VdF-based fluoroelastomer, including TFE, HFP, PMVE, perfluoroethyl vinyl ether (PEVE), PPVE, CTFE, trifluoroethylene, hexafluoroisobutene, vinyl fluoride, Et, Pr, alkyl vinyl ether, or monomers giving a crosslinkable group. Among them, more preferred is PMVE, CTFE, HFP, or TFE.

The TFE/Pr-based partial fluoroelastomer refers to a fluorine-containing copolymer including 45-70 mol% TFE and 55-30 mol% Pr. In addition to these two components, a specific third component may be included.

Examples of the specific third component include: a fluorine-containing monomer such as a fluorinated olefin other than TFE (e.g., VdF, HFP, CTFE, perfluoro(butylethylene)), a fluorinated vinyl ether (perfluoro(propyl vinyl ether), or perfluoro(methyl vinyl ether); or a hydrocarbon-based monomer such as $\alpha$-olefin (e.g., ethylene, 1-butene), a vinyl ether compound (e.g., ethyl vinyl ether, butyl vinyl ether, hydroxybutyl vinyl ether), and a vinyl ester compound (e.g., vinyl acetate, vinyl benzoate, vinyl crotonate, vinyl methacrylate). These specific third components may be used singly or two or more kinds thereof may be used in combination.

The TFE/Pr-based partial fluoroelastomer preferably contains VdF. Among TFE/Pr-based partial fluoroelastomers, an elastomer composed of TFE, Pr and VdF is called a TFE/Pr/VdF-based fluoroelastomer.

The TFE/Pr/VdF-based fluoroelastomer may further contain the above specific third component other than VdF. The above specific third components may be used singly or two or more kinds thereof may be used in combination. The total content of the third component(s) in the TFE/Pr-based partial fluoroelastomer is preferably 35 mol% or less, more preferably 33 mol% or less, and still more preferably 31 mol% or less.

The Et/HFP copolymer has an Et/HFP ratio of preferably (35-80)/(65-20) (mol%) and more preferably (40-75)/(60-25) (mol%).

The Et/HFP/TFE copolymer has an Et/HFP/TFE ratio of preferably (35-75)/(25-50)/(0-15) (mol%) and more preferably (45-75)/(25-45)/(0-10) (mol%).

The partial fluoroelastomer is preferably a VdF unit-containing partial fluoroelastomer, more preferably a VdF/HFP copolymer or VdF/HFP/TFE copolymer, and particularly preferably those with a VdF/HFP/TFE ratio of (32-85)/(10-34)/(0-34) (mol%). The VdF/HFP/TFE ratio is more preferably (32-85)/(15-34)/(0-34) (mol%) and still more preferably (47-81)/(17-29)/(0-26) (mol%).

For example, in the above VdF/HFP copolymer, the VdF/HFP ratio is preferably (45-85)/(15-55) (mol%), more preferably (50-83)/(17-50) (mol%), still more preferably (55-81)/(19-45) (mol%), and particularly preferably (60-80)/(20-40) (mol%) .

The VdF/HFP/TFE copolymer has a VdF/HFP/TFE ratio of preferably (32-80)/(10-34)/(4-34) (mol%).

The ratio described above is the ratio of the main monomers in the partial fluoroelastomer, and in addition to the main monomers, a monomer giving a crosslinkable group may be copolymerized. Any monomer giving a crosslinkable group is acceptable as long as an appropriate crosslinkable group can be introduced into the partial fluoroelastomer in accordance with the production procedure and cross-linking system. Examples include a known polymerizable compound containing a crosslinkable group such as an iodine atom, bromine atom, carbon-carbon double bond, cyano group, carboxyl group, hydroxyl group, amino group, and/or ester group.

Preferable examples of the monomer giving a crosslinkable group include a compound represented by general formula (2):

$$CY^1_2=CY^2R_f^2X^1 \quad (2)$$

wherein $Y^1$ and $Y^2$ are each a fluorine atom, a hydrogen atom or $-CH_3$; $R_f^2$ is a linear or branched fluorine-containing alkylene group optionally having one or more ether-bonding oxygen atoms and optionally having an aromatic ring, with part or all of hydrogen atoms replaced by a fluorine atom(s); and $X^1$ is an iodine or bromine atom.

Specific examples of the monomer giving a crosslinkable group include: an iodine- or bromine-containing monomer represented by general formula (3):

$$CY^1_2=CY^2R_f^3CHR^1\text{-}X^1 \quad (3)$$

wherein $Y^1$, $Y^2$ and $X^1$ are the same as above; $R_f^3$ is a linear or branched fluorine-containing alkylene group optionally having one or more ether-bonding oxygen atoms, with part or all of hydrogen atoms replaced by a fluorine atom(s), namely a linear or branched fluorine-containing alkylene group with part or all of hydrogen atoms replaced by a fluorine atom(s), a linear or branched fluorine-containing oxyalkylene group with part or all of hydrogen atoms replaced by a fluorine atom(s), or a linear or branched fluorine-containing polyoxyalkylene group with part or all of hydrogen atoms replaced by a fluorine atom(s); and $R^1$ is a hydrogen atom or a methyl group; and

an iodine- or bromine-containing monomer represented by any of general formulas (4) to (21):

$$CY^4_2=CY^4(CF_2)_n\text{-}X^1 \quad (4)$$

wherein $Y^4$ moieties are the same or different, and are each a hydrogen atom or a fluorine atom; and n is an integer from 1 to 8,

$$CF_2=CFCF_2R_f^4\text{-}X^1 \quad (5)$$

wherein $R^4$ is $-(OCF_2)_n-$ or $-(OCF(CF_3))_n-$ where n is an integer from 0 to 5,

$$CF_2=CFCF_2\ (OCF(CF_3)CF_2)_m(OCH_2CF_2CF_2)_nOCH_2CF_2\text{-}X^1 \quad (6)$$

wherein m is an integer from 0 to 5 and n is an integer from 0 to 5,

$$CF_2=CFCF_2(OCH_2CF_2CF_2)_m(OCF(CF_3)CF_2)_nOCF(CF_3)\text{-}X^1 \quad (7)$$

wherein m is an integer from 0 to 5 and n is an integer from 0 to 5,

$$CF_2=CF(OCF_2CF(CF_3))_mO(CF_2)_n\text{-}X^1 \quad (8)$$

wherein m is an integer from 0 to 5 and n is an integer from 1 to 8,

$$CF_2=CF(OCF_2CF(CF_3))_m\text{-}X^1 \quad (9)$$

wherein m is an integer from 1 to 5,

$$CF_2=CFOCF_2(CF\ (CF_3)OCF_2)_nCF(\text{-}X^1)CF_3 \quad (10)$$

wherein n is an integer from 1 to 4,

$$CF_2=CFO(CF_2)_nOCF(CF_3)\text{-}X^1 \quad (11)$$

wherein n is an integer from 2 to 5,

$$CF_2=CFO(CF_2)_n-(C_6H_4)-X^1 \qquad (12)$$

wherein n is an integer from 1 to 6,

$$CF_2=CF(OCF_2CF(CF_3))_nOCF_2CF(CF_3)-X^1 \qquad (13)$$

wherein n is an integer from 1 to 2,

$$CH_2=CFCF_2O(CF\ (CF_3)CF_2O)_nCF(CF_3)-X^1 \qquad (14)$$

wherein n is an integer from 0 to 5,

$$CF_2=CFO(CF_2CF(CF_3)O)_m(CF_2)_n-X^1 \qquad (15)$$

wherein m is an integer from 0 to 5 and n is an integer from 1 to 3,

$$CH_2=CFCF_2OCF(CF_3)OCF(CF_3)-X^1 \qquad (16),$$

$$CH_2=CFCF_2OCH_2CF_2-X^1 \qquad (17),$$

$$CF_2=CFO(CF_2CF(CF_3)O)_mCF_2CF(CF_3)-X^1 \qquad (18)$$

wherein m is an integer of 0 or more,

$$CF_2=CFOCF(CF_3)CF_2O(CF_2)_n-X^1 \qquad (19)$$

wherein n is an integer of 1 or more,

$$CF_2=CFOCF_2OCF_2CF(CF_3)OCF_2-X^1 \qquad (20),$$

and

$$CH_2=CH-(CF_2)_nX^1 \qquad (21)$$

wherein n is an integer from 2 to 8,
provided that in general formulas (4) to (21), $X^1$ is the same as above.

These may be used singly or in any combination.
Preferable examples of the iodine- or bromine-containing monomer represented by general formula (3) include an iodine-containing fluorinated vinyl ether represented by general formula (22):

[Chemical Formula 1]

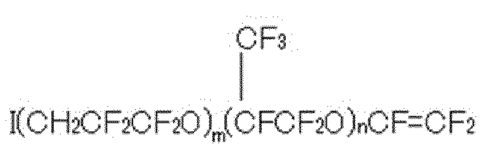

(22)

wherein m is an integer from 1 to 5 and n is an integer from 0 to 3.
More specific examples include:

[Chemical Formula 2]

$ICH_2CF_2CF_2OCF=CF_2$ $I(CH_2CF_2CF_2O)_2CF=CF_2$

$I(CH_2CF_2CF_2O)_3CF=CF_2$

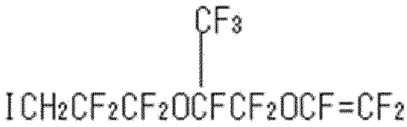

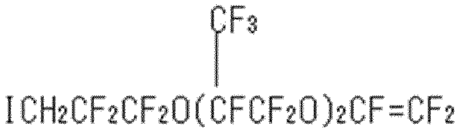

Among them, $ICH_2CF_2CF_2OCF=CF_2$ is preferable.

More specific preferable examples of the iodine- or bromine-containing monomer represented by general formula (4) include $ICF_2CF_2CF=CH_2$ and $I(CF_2CF_2)_2CF=CH_2$.

More specific preferable examples of the iodine- or bromine-containing monomer represented by general formula (8) include $I(CF_2CF_2)_2OCF=CF_2$.

More specific preferable examples of the iodine- or bromine-containing monomer represented by general formula (21) include $CH_2=CHCF_2CF_2I$ and $I(CF_2CF_2)_2CH=CH_2$.

The monomer giving a crosslinkable group is preferably a bisolefin compound represented by formula: $R^2R^3C=CR^4\text{-}Z\text{-}CR^5=CR^6R^7$
wherein $R^2$, $R^3$, $R^4$, $R^5$, $R^6$ and $R^7$ are the same or different, and each H or a $C_{1-5}$ alkyl group; and Z is a linear or branched $C_{1-18}$ alkylene or cycloalkylene group optionally containing an oxygen atom and preferably at least partially fluorinated, or a (per)fluoropolyoxyalkylene group. The term "(per)fluoropolyoxyalkylene group" herein means a "fluoropolyoxyalkylene group or perfluoropolyoxyalkylene group".

Z is preferably a $C_{4-12}$ (per) fluoroalkylene group, and $R^2$, $R^3$, $R^4$, $R^5$, $R^6$ and $R^7$ are each preferably a hydrogen atom.

When Z is a (per)fluoropolyoxyalkylene group, preferred is a (per)fluoropolyoxyalkylene group represented by formula:

$$-(Q)_p\text{-}CF_2O\text{-}(CF_2CF_2O)_m\text{-}(CF_2O)_n\text{-}CF_2\text{-}(Q)_p\text{-}$$

wherein Q is a $C_{1-10}$ alkylene group or a $C_{2-10}$ oxyalkylene group; p is 0 or 1; and m and n are each an integer such that an m/n ratio is 0.2 to 5, and such that the (per)fluoropolyoxyalkylene group has a molecular weight within a range from 500 to 10,000 and preferably from 1,000 to 4,000. In this formula, Q is preferably selected from $-CH_2OCH_2-$ and $-CH_2O(CH_2CH_2O)_sCH_2-$ where s = 1 to 3.

Preferable examples of the bisolefin include

$CH_2=CH\text{-}(CF_2)_2\text{-}CH=CH_2$,

$CH_2=CH\text{-}(CF_2)_4\text{-}CH=CH_2$,

$CH_2=CH\text{-}(CF_2)_6\text{-}CH=CH_2$,

and

formula: $CH_2=CH-Z^1-CH=CH_2$

wherein $Z^1$ is $-CH_2OCH_2-CF_2O-(CF_2CF_2O)_m-(CF_2O)_n-CF_2-CH_2OCH_2-$ where m/n is 0.5 and has a molecular weight of preferably 2,000.

Among them, preferred is 3,3,4,4,5,5,6,6,7,7,8,8-dodecafluoro-1,9-decadiene, which is represented by $CH_2=CH-(CF_2)_6-CH=CH_2$.

The number average molecular weight Mn of the partial fluoroelastomer is preferably from 1,000 to 1,000,000, more preferably from 10,000 to 500,000, and particularly preferably from 20,000 to 300,000.

Also, the fluorine content of the partial fluoroelastomer is preferably 50 mass% or more, more preferably 55 mass% or more, and still more preferably 60 mass% or more. For the upper limit, the fluorine content is preferably 75 mass% or less and more preferably 73 mass% or less. The fluorine content is calculated based on values determined by, for example, $^{19}F$-NMR, $^{1}H$-NMR, and elemental analysis.

The partial fluoroelastomer has a Mooney viscosity (ML1+10 (100°C)) at 100°C of preferably 130 or less. The Mooney viscosity is more preferably 110 or less and still more preferably 90 or less. In addition, the Mooney viscosity is more preferably 10 or more and still more preferably 20 or more. Here, the Mooney viscosity is the value measured in accordance with JIS K 6300-1.2013.

The partial fluoroelastomer has a glass transition temperature of preferably from -50 to 0°C. The glass transition temperature is more preferably -2°C or lower and still more preferably -3°C or lower. The glass transition temperature is more preferably -45°C or higher and still more preferably -40°C or higher. The glass transition temperature may be -10°C or higher, or -9°C or higher. Here, the glass transition temperature can be determined, according to JISK6240:2011, from a DSC derivative curve from a DSC curve obtained while increasing the temperature of a 10-mg sample at 20°C/min using a differential scanning calorimeter (e.g., X-DSC7000, manufactured by Hitachi High-Tech Science Corporation).

The partial fluoroelastomer has an iodine content of preferably from 0.05 to 1.0 mass%. The iodine content is more preferably 0.08 mass% or more, still more preferably 0.10% or more and more preferably 0.80 mass% or less and still more preferably 0.60 mass% or less.

The iodine content can be determined by elemental analysis. Specifically, 12 mg of the partial fluoroelastomer and 5 mg of $Na_2SO_3$ are mixed. Absorption solution containing 30 mg of a mixture of $Na_2CO_3$ and $K_2CO_3$ in a 1:1 ratio (mass ratio) in 20 ml of pure water is used. They are put in a quartz flask and combusted in oxygen. After left for 30 minutes, the resultant may be subjected to analysis using a Shimadzu 20A ion chromatograph. The calibration curve may be drawn using a KI standard solution, a standard containing 0.5 mass ppm of iodine ion, and a standard containing 1.0 mass ppm of iodine ion.

(Perfluoroelastomer)

The perfluoroelastomer may be produced by polymerizing a perfluoro monomer as a fluorine-containing monomer.

The perfluoro monomer is preferably at least one selected from the group consisting of tetrafluoroethylene [TFE], hexafluoropropylene [HFP], a perfluoro monomer represented by

$$CF_2=CF-ORf^{13} \qquad (23)$$

wherein $Rf^{13}$ represents a $C_{1-8}$ perfluoroalkyl group,
a perfluoro monomer represented by

$$CF_2=CFOCF_2ORf^{14} \qquad (24)$$

wherein $Rf^{14}$ is a linear or branched $C_{1-6}$ perfluoroalkyl group, a $C_{5-6}$ cyclic perfluoroalkyl group, or a linear or branched $C_{2-6}$ perfluorooxyalkyl group containing 1 to 3 oxygen atoms, and
a perfluoro monomer represented by

$$CF_2=CFO(CF_2CF(Y^{15})O)_m(CF_2)_nF \qquad (25)$$

wherein $Y^{15}$ represents a fluorine atom or a trifluoromethyl group, m is an integer from 1 to 4, and n is an integer from 1 to 4.

During polymerization of perfluoro monomer, a monomer giving a crosslinkable group may be polymerized

together with the perfluoro monomer.

Examples of the monomer giving a crosslinkable group include a monomer represented by

$CX^4_2=CX^5Rf^{15}X^6$ (26)

wherein $X^4$ and $X^5$ are each independently H, F, or a $C_{1-5}$ alkyl group; $Rf^{15}$ is a linear or branched alkylene group or oxyalkylene group optionally having one or more ether-bonding oxygen atoms and optionally having an aromatic ring, with part or all of hydrogen atoms optionally replaced by a fluorine atom(s); and $X^6$ is an iodine atom, bromine atom, cyano group, carboxyl group, alkoxycarbonyl group, hydroxyl group, vinyl group, azide group, sulfonyl azide group, carbonyl azide group, or alkyne group. The alkyne group may be an ethynyl group.

Among them, the monomer giving a crosslinkable group is preferably at least one monomer selected from the group consisting of monomers represented by

$CX^{16}_2=CX^{16}-Rf^{16}CHR^{16}X^{17}$ (27)

wherein $X^{16}$ moieties are each independently a hydrogen atom, a fluorine atom, or $CH_3$, $Rf^{16}$ is a fluoroalkylene group, a perfluoroalkylene group, a fluoro(poly)oxyalkylene group, or a perfluoro(poly)oxyalkylene group, $R^{16}$ is a hydrogen atom or $CH_3$, and $X^{17}$ is an iodine atom or bromine atom,

$CX^{16}_2=CX^{16}-Rf^{17}X^{17}$ (28)

wherein $X^{16}$ moieties are each independently a hydrogen atom, a fluorine atom, or $CH_3$, $Rf^{17}$ is a fluoroalkylene group, a perfluoroalkylene group, a fluoro(poly)oxyalkylene group, or a perfluoro(poly)oxyalkylene group, and $X^{17}$ is an iodine atom or bromine atom,

$CF_2=CFO(CF_2CF(CF_3)O)_m(CF_2)_n-X^{18}$ (29)

wherein m is an integer from 0 to 5, n is an integer from 1 to 3, and $X^{18}$ is a cyano group, azide group, sulfonyl azide group, carbonyl azide group, carboxyl group, alkoxycarbonyl group, alkyne group, iodine atom, bromine atom, or $CH_2I$,

$CH_2=CFCF_2O(CF (CF_3)CF_2O)_m(CF (CF_3))_n-X^{19}$ (30)

wherein m is an integer from 0 to 5, n is an integer from 1 to 3, and $X^{19}$ is a cyano group, carboxyl group, alkoxycarbonyl group, iodine atom, bromine atom, or $CH_2OH$, and

$CR^{20}_2=CR^{20}-Z^{20}-CR^{20}=CR^{20}_2$ (31)

wherein $R^{20}$ moieties are each independently a hydrogen atom or a $C_{1-5}$ alkyl group, and
$Z^{20}$ is a linear or branched optionally oxygen atom-containing $C_{1-18}$ alkylene group, a $C_{3-18}$ cycloalkylene group, an at least partially fluorinated $C_{1-10}$ alkylene group or oxyalkylene group, or a (per)fluoropolyoxyalkylene group having a molecular weight of from 500 to 10,000 and represented by

$-(Q)_p-CF_2O-(CF_2CF_2O)_m(CF_2O)_n-CF_2-(Q)_p-$

wherein Q is an alkylene group or an oxyalkylene group, p is 0 or 1, and m/n is from 0.2 to 5.

$X^{16}$ is preferably a fluorine atom. $Rf^{16}$ and $Rf^{17}$ are each preferably a $C_{1-5}$ perfluoroalkylene group. $R^{16}$ is preferably a hydrogen atom. $X^{18}$ is preferably a cyano group, alkoxycarbonyl group, iodine atom, bromine atom, or $-CH_2I$. $X^{19}$ is preferably a cyano group, alkoxycarbonyl group, iodine atom, bromine atom, or $CH_2OH$.

The monomer giving a crosslinkable group is preferably at least one selected from the group consisting of $CF_2=CFOCF_2CF(CF_3)OCF_2CF_2CN$, $CF_2=CFOCF_2CF(CF_3)OCF_2CF_2COOH$, $CF_2=CFOCF_2CF(CF_3)OCF_2CF_2CH_2I$, $CF_2=CFOCF_2CF_2CH_2I$, $CH_2=CFCF_2OCF(CF_3)CF_2OCF(CF_3)CN$, $CH_2=CFCF_2OCF(CF_3)CF_2OCF(CF_3)COOH$, $CH_2=CFCF_2OCF(CF_3)CF_2OCF(CF_3)CH_2OH$, $CH_2=CHCF_2CF_2I$, $CH_2=CH(CF_2)_2CH=CH_2$, $CH_2=CH(CF_2)_6CH=CH_2$, and $CF_2=CFO(CF_2)_5CN$, and more preferably at least one selected from the group consisting of $CF_2=CFOCF_2CF(CF_3)OCF_2CF_2CN$ and $CF_2=CFOCF_2CF_2CH_2I$.

The perfluoroelastomer is preferably at least one selected from the group consisting of TFE unit-containing

perfluoroelastomers such as a copolymer of TFE/monomer represented by general formula (23), (24) or (25) and a copolymer of TFE/monomer represented by general formula (23), (24) or (25)/monomer giving a crosslinkable group.

The ratio in the TFE/perfluoro(methyl vinyl ether) (PMVE) copolymer is preferably 45-90/10-55 (mol%), more preferably 55-80/20-45, and still more preferably 55-70/30-45.

The ratio in the copolymer of TFE/PMVE/monomer giving a crosslinkable group is preferably 45-89.9/10-54.9/0.01-4 (mol%), more preferably 55-77.9/20-49.9/0.1-3.5, and still more preferably 55-69.8/30-44.8/0.2-3.

The ratio in the copolymer of TFE/$C_{4-12}$ monomer represented by general formula (23), (24), or (25) is preferably 50-90/10-50 (mol%), more preferably 60-88/12-40, and still more preferably 65-85/15-35.

The ratio in the copolymer of TFE/$C_{4-12}$ monomer represented by general formula (23), (24), or (25)/monomer giving a crosslinkable group is preferably 50-89.9/10-49.9/0.01-4 (mol%), more preferably 60-87.9/12-39.9/0.1-3.5, and still more preferably 65-84.8/15-34.8/0.2-3.

If the ratios in the copolymers are deviated from the respective ranges, the copolymer tends to lose its properties as a rubber elastomer and has properties similar to resin.

The perfluoroelastomer is preferably at least one selected from the group consisting of a copolymer of TFE/monomer represented by general formula (25)/monomer giving a crosslinkable group, a copolymer of TFE/monomer represented by general formula (25), a copolymer of TFE/monomer represented by general formula (23), and a copolymer of TFE/monomer represented by general formula (23)/monomer giving a crosslinkable group.

Examples of the perfluoroelastomer include the perfluoroelastomer described in, for example, WO 97/24381, JP-B-S61-57324, JP-B-H4-81608, or JP-B-H5-13961.

In terms of excellent compression-set resistance in high-temperatures, the perfluoroelastomer has a glass transition temperature of preferably -70°C or higher, more preferably -60°C or higher, and still more preferably -50°C or higher. In terms of favorable cold resistance, the glass transition temperature is preferably 5°C or lower, more preferably 0°C or lower, and still more preferably -3°C or lower.

The glass transition temperature can be determined by using a differential scanning calorimeter (DSC822e, manufactured by METTLER TOLEDO) to obtain a DSC curve by increasing the temperature of a 10-mg sample at 10°C/min. The glass transition temperature was defined as the midpoint between the two intersections of the baseline extension lines before and after the secondary transition of the DSC curve and the tangent line at the inflection point of the DSC curve.

In terms of favorable heat resistance, the perfluoroelastomer has a Mooney viscosity ML(1+20) at 170°C of preferably 30 or more, more preferably 40 or more, and still more preferably 50 or more. In terms of favorable processability, the perfluoroelastomer has a Mooney viscosity ML(1+20) at 170°C of preferably 150 or less, more preferably 120 or less, and still more preferably 110 or less.

In terms of favorable heat resistance, the perfluoroelastomer has a Mooney viscosity ML(1+20) at 140°C of preferably 30 or more, more preferably 40 or more, and still more preferably 50 or more. In terms of favorable processability, the perfluoroelastomer has a Mooney viscosity ML(1+20) at 140°C of preferably 180 or less, more preferably 150 or less, and still more preferably 110 or less.

In terms of favorable heat resistance, the perfluoroelastomer has a Mooney viscosity ML(1+10) at 100°C of preferably 10 or more, more preferably 20 or more, and still more preferably 30 or more. In terms of favorable processability, the perfluoroelastomer has a Mooney viscosity ML(1+10) at 100°C of preferably 120 or less, more preferably 100 or less, and still more preferably 80 or less.

The above Mooney viscosity can be measured at 170°C, 140°C, or 100°C using a Mooney viscometer Model MV2000E, manufactured by ALPHA TECHNOLOGIES, in accordance with JIS K 6300.

The fluoroelastomer obtained by the production method of the present disclosure can be made into a crosslinked product by adding a cross-linking agent. The type and amount of the cross-linking agent are not limited, and it can be used within the known range.

There is no limitation on the method for obtaining the fluoroelastomer composition, as long as the fluoroelastomer and the cross-linking agent can be mixed homogenously in the method. For example, powder of solely coagulated fluoroelastomer and the cross-linking agent can be kneaded together optionally with other additives and compounding agents using an open roll or other kneading machine.

For a case where an uncrosslinked elastomer as the fluoroelastomer is crosslinked with a cross-linking agent, examples of the cross-linking system include a peroxide cross-linking system, a polyol cross-linking system, and a polyamine cross-linking system. It is preferable to use at least one selected from the group consisting of a peroxide cross-linking system and a polyol cross-linking system. In terms of chemical resistance, the peroxide cross-linking system is preferred, and in terms of heat resistance, the polyol cross-linking system is preferred.

Therefore, the cross-linking agent is preferably at least one cross-linking agent selected from the group consisting of a polyol cross-linking agent and a peroxide cross-linking agent, and is more preferably a peroxide cross-linking agent.

The amount of cross-linking agent blended may be selected according to, for example, the type of cross-linking agent, but is preferably from 0.2 to 5.0 parts by mass and more preferably from 0.3 to 3.0 parts by mass per 100 parts by mass of the fluoroelastomer composition.

Peroxide cross-linking can be performed by using a peroxide-crosslinkable uncrosslinked elastomer as a fluoroelastomer and an organic peroxide as a cross-linking agent.

The peroxide-crosslinkable uncrosslinked elastomer is not limited, and any uncrosslinked elastomer having a peroxide-crosslinkable site is acceptable. The peroxide crosslinkable site is not limited, and examples include an iodine atom-containing site and a bromine atom-containing site.

The organic peroxide may be any organic peroxide capable of readily generating peroxy radicals in the presence of heat or redox system. Examples include 2,5-dimethyl-2,5-di(t-butylperoxy)hexane and 2,5-dimethyl-2,5-di(t-butylperoxy)-hexyne-3.

The amount of organic peroxide blended is preferably from 0.1 to 15 parts by mass and more preferably from 0.3 to 5 parts by mass per 100 parts by mass of fluoroelastomer.

When the cross-linking agent is an organic peroxide, the fluoroelastomer composition preferably further contain a cross-linking aid. Examples of the cross-linking aid include triallyl cyanurate and triallyl isocyanurate (TAIC).

The amount of cross-linking aid blended is preferably from 0.01 to 10 parts by mass, more preferably from 0.01 to 7.0 parts by mass, and still more preferably from 0.1 to 5.0 parts by mass per 100 parts by mass of the fluoroelastomer.

Polyol cross-linking can be performed by using a polyol-crosslinkable uncrosslinked elastomer as a fluoroelastomer and a polyhydroxy compound as a cross-linking agent.

The polyol-crosslinkable uncrosslinked elastomer is not limited, and any uncrosslinked elastomer having a polyol-crosslinkable site is acceptable. The polyol crosslinkable site is not limited, and examples include a vinylidene fluoride (VdF) unit-containing site. Examples of the method of introducing the cross-linking site includes a copolymerizing a monomer giving a cross-linking site during polymerization of the uncrosslinked elastomer.

As the polyhydroxy compound, a polyhydroxy aromatic compound is suitably used in view of excellent heat resistance.

The elastic material may include any additives that are commonly blended with the elastomer, if needed. Examples of the additives include a filler, processing aid, plasticizer, colorant, stabilizer, adhesion aid, mold release agent, conductive agent, thermal conductive agent, surface non-adhesive agent, softening agent, heat resistance improver, and flame retarder. These additives may be used as long as they do not impair the effects of the present disclosure.

The sealing member can be obtained from the elastic material.

The sealing member can be obtained by forming the above elastic material and cross-linking it. The fluoroelastomer compositions may be formed by conventionally known procedures. The methods and conditions for forming and cross-linking may be any known methods and conditions acceptable to the forming and the cross-linking to be employed. The order of forming and cross-linking is not limited; forming may be followed by cross-linking, cross-linking may be followed by forming, or forming and cross-linking may be performed simultaneously.

Examples of the forming method include, but are not limited to, pressure forming using a mold, and injection forming. It is possible to use, as the cross-linking method, steam cross-linking, a common method in which the cross-linking reaction is initiated by heating, or radiation cross-linking. In particular, heat-mediated cross-linking reaction is preferred. Specific cross-linking conditions, without any limitation, may be appropriately selected usually in the temperature range of from 140 to 250°C and cross-linking time of 1 minute to 24 hours, according to, for example, the type of cross-linking agent used.

(Elongation at Break)

For the sealing member of the present disclosure, the elongation at bleak of the material constituting the sealing member is designated as Eb. The elongation at break can be measured in accordance with JIS K 6251, and is the ratio of the elongation when a test piece, a dumbbell-shaped No. 5 test piece with 2-mm thickness, is cut by tension, to the test length before testing.

Strain when a sealing member in a compressed state is attached largely depends on the shape of that sealing member. On the other hand, how easily the sealing member is damaged is related to the elongation at break of the material constituting the sealing member.

In other words, if the strain exceeding the above-mentioned elongation at break is applied to the sealing member, it may cause cracking. The purpose of the present disclosure is to prevent rupture of the sealing member. To accomplish the purpose, it is important to provide the material with a shape such that strain exceeding the elongation at break is not applied.

In view of this, in the present disclosure, the maximum strain when a sealing member with a specific shape is compressed is calculated, and the shape of the sealing member is then deduced so that this maximum strain is in a range smaller than Eb above.

The results of measuring the elongation at break have a certain variation. Therefore, the elongation at break was measured for 10 samples, and the average value calculated while excluding the maximum and minimum values was used as the elongation at break. As a result of measurement by this method, the elongation at break of the fluoroelastome is preferably from 200% to 300% with a standard deviation $\sigma$ of 20 or less.

(Sealing Member)

Preferably, the sealing member of the present disclosure has a circular ring shape with a rectangular cross-section as shown in Figure 3. Then, the sealing member having such a circular ring shape is preferably inserted between the lid and the battery container, as shown in Figure 5, when used. Such a sealing member is compressed between the lid and the battery container and has a high compression rate. The term "rectangular cross-section" herein means that the cross-sectional shape when a circular ring-shaped sealing member is cut from the center of the circle toward the outward direction is square or rectangular.

The cross-sectional shape of the circular ring-shaped sealing member is shown in Figure 4. In this cross-section, the width of the circular ring in the radial direction is designated as W, and the circumferential thickness is designated as T. The cross-sectional aspect ratio is defined as

$$\beta = T/W.$$

The aspect ratio is the value determined in the uncompressed state and obtained by measurement by a common procedure.

The outer diameter of the circular ring-shaped sealing member is preferably from 10 mm to 50 mm. Such a range is a size fit for the general shape of batteries currently in use.

The above W is preferably from 0.5 to 2.5 mm. In view of function as a sealing member, it is desirable to have a width in this range.

The lower limit of W is preferably 0.4 mm, more preferably 0.45 mm, and still more preferably 0.5 mm. The upper limit of W is preferably 3.5 mm, more preferably 3.0 mm, and still more preferably 2.5 mm.

T is preferably from 0.5 to 2.5 mm. In view of function as a sealing member, it is desirable to have a thickness in this range.

The lower limit of T is preferably 0.4 mm, more preferably 0.45 mm, and still more preferably 0.5 mm. The upper limit of T is preferably 3.5 mm, more preferably 3.0 mm, and still more preferably 2.5 mm.

(To Calculate Maximum Strain by Simulation Analysis)

The strain of sealing member with the above-described shape when compressed at a certain compression rate was calculated for sealing members with various $\beta$. Simulation was analyzed using ANSYS V19.0 under the following conditions: like the component configuration of the electrode section in a battery, there were a member A and member B, where the member A was disposed on the axially lower side of the sealing member and imitates an electrode with a surface extending in the radial direction of the sealing member, and the member B was disposed on the axially upper side of the sealing member and imitates a lid with a surface extending in the radial direction of the sealing member; and with the member A fixed, the member B was moved downward while kept horizontally, so that the sealing member placed between the two was compressed.

Here, the material of the sealing member used in the simulation was a VdF-based fluoroelastomer with specific physical properties: the tensile stress at 100% elongation of 5.0 MPa and the elongation at break of 210% in accordance with JIS K 6251. Tensile tests were conducted in accordance with JIS K 6251, and the obtained test data of the tensile stress and elongation were used to calculate material parameters by precise curve fitting to a hyperelastic model provided in ANSYS. Further, the hyperelastic model using the calculated material parameters was set up for the material properties of the sealing member. The members A and B were assumed to be rigid planes as they are sufficiently rigid against the sealing member, namely an elastomeric material. It is known that the value of the strain generated by compression of the sealing member, which will be discussed later, does not depend on the rigidity of the elastomer, i.e., the shape and size of the stress-strain linear diagram in this case. In other words, in this sense, the physical properties of the material of the sealing member may be those of any fluoroelastomer other than the above, and furthermore, any elastomeric material other than the fluoroelastomer may be used.

Under the simulation conditions described above, sealing members with various $\beta$ were compressed at specified compression rates, and the maximum strain was obtained for each compression rate. Here, the maximum strain is obtained by measuring the maximum main strain generated in the sealing member surface in a specified compressed state, and converting the main strain to the nominal strain equivalent to uniaxial tensile strain.

Figure 8 shows the relationship between the maximum strain in the sealing member surface and the compression rate for various $\beta$. Figure 9 shows the relationship between the maximum strain in the sealing member surface and the cross-sectional aspect ratio $\beta$ for various compression rates R.

These simulation results have revealed the relationship such that the maximum strain $\varepsilon$ can be expressed as

$$\varepsilon = a \times \beta^b$$

where a = 6.919 × R - 2.066 and b = 2.278 × R - 1.767

As mentioned above, the sealing member breaks when the maximum strain, which is higher than the elongation at break of the material, occurs. Therefore, by designing the shape of the sealing member so as to satisfy the relationship $Eb \geq \varepsilon$, rupture is less likely to occur.

The above has revealed that when the relational expression

$$Eb \geq a \times \beta^b$$

where a = 6.919 × R - 2.066 and b = 2.278 × R - 1.767
is satisfied, rupture and/or cracking is less likely to occur in the sealing member.

In addition, for less occurrence of rupture, the relational expression

$$Eb - \sigma \geq a \times \beta^b$$

where $\sigma$ is the standard deviation of Eb
may be satisfied. As mentioned above, the elongation at break has a certain variation. Hence, as mentioned above, multiple samples are used for measurement to obtain the value of elongation at break. Since multiple data are obtained for obtaining the average, the standard deviation $\sigma$ can be calculated therefrom. If the strain obtained by calculation is smaller than Eb-$\sigma$, the incidence of cracking of the sealing members can be lowered. If it is smaller than Eb-2$\sigma$, the incidence of cracking can be decreased more.

Also, for less occurrence of rupture, the relational expression

$$0.9 \times Eb \geq a \times \beta^b$$

may be satisfied.

For example, when a material including VdF-based fluoroelastomer, which is the partial fluoroelastomer mentioned above, is used, Eb = 200%. Thus, the relational expression

$$3.0 \geq a \times \beta^b$$

where a = 6.919 × R - 2.066 and b = 2.278 × R - 1.767
should be satisfied. Further, it is more preferable that the relational expression $2.5 \geq a \times \beta^b$, where a and b are the same as defined in the above expression, be satisfied.

It is still more preferable that the relational expression $2.0 \geq a \times \beta^b$, where a and b are the same as defined in the above expression, be satisfied.

In this disclosure, the relational expression

$$\varepsilon = a \times \beta^b$$

where a = 6.919 × R - 2.066 and b = 2.278 × R - 1.767
is a general formula to calculate the maximum strain $\varepsilon$ based on the compression rate of the sealing member and the shape of the sealing member. This is evident from the simulation conditions described above. Thus, this general formula is valid regardless of the type of material used.

Although the $\varepsilon$ value and compression rate vary depending on the material used and the way to use the material, the general formula above is a widely generalized numerical formula. Therefore, the present disclosure can be applied

to any type of elastomer by using the compression rate R and the maximum strain ε of the material appropriately.

Examples

Hereinbelow, the present disclosure will be described by way of Examples. However, the present disclosure is not limited to Examples described below.

The following Examples were examined by producing sealing members reflecting the above-mentioned simulation results and evaluating their physical properties.

The validity of the above calculation formulas was checked by producing sealing members with various shapes by using a VdF-based fluoroelastomer (polymer composition: VdF/TFE/HFP = 50/20/30 mol%; iodine content: 0.5 mass%). The elastomer used here was obtained by molding a material having the following formulation by the following molding procedure. The elongation at break according to JIS K 6251 was 210%. Further, the standard deviation of elongation at break was 20%.

(Formulation)

The composition was prepared by kneading, with an open roll, 100 parts by mass of the above VdF-based fluoroelastomer, 20 parts by mass of MT carbon, 4 parts by mass of triallyl isocyanurate (TAIC), and 1.5 parts by mass of organic peroxide (2,5-dimethyl-2,5-bis(t-butylperoxy)hexane).

(Molding Procedure)

The above composition was placed in a mold, pressurized by a compression molding machine, and subjected to secondary vulcanization at 170°C for 10 minutes for molding to obtain a sealing member.

The produced sealing members had the values of T and W shown in the following table, which are applied to the formulas of the present disclosure, and the maximum strain ε calculated when R = 62.5% is shown in Table 1.

[Table 1]

| | Sealing member 1 | Sealing member 2 | Sealing member 3 |
|---|---|---|---|
| T | 2.50 | 1.60 | 0.88 |
| W | 1.25 | 1.75 | 1.75 |
| T/W (β) | 200% | 91% | 50% |
| Maximum strain (ε) | 178% | 233% | 287% |

These sealing members were attached to lithium-ion batteries at a compression rate of 62.5% in accordance with the following evaluation method. After attached and then detached, it was observed whether or not cracking developed in the sealing member. A sealing member with no cracking or cracks found in the surface thereof was rated as ○; and a sealing member with cracking or cracks found in the surface thereof was rated as ×. Here, 10 samples were tested. Table 2 shows the results.

[Table 2]

| No. | Sealing member 1 | Sealing member 2 | Sealing member 3 |
|---|---|---|---|
| 1 | ○ | ○ | × |
| 2 | ○ | ○ | × |
| 3 | ○ | ○ | × |
| 4 | ○ | ○ | × |
| 5 | ○ | ○ | × |
| 6 | ○ | ○ | × |
| 7 | ○ | × | × |
| 8 | ○ | × | × |

(continued)

| No. | Sealing member 1 | Sealing member 2 | Sealing member 3 |
|---|---|---|---|
| 9 | ○ | × | × |
| 10 | ○ | × | × |

Further, the maximum strain ε when the compression rate R was 52.5% was calculated by applying the formula of the present disclosure to the produced sealing members, and is shown in Table 3.

[Table 3]

| | Sealing member 1 | Sealing member 2 | Sealing member 3 |
|---|---|---|---|
| T | 2.50 | 1.60 | 0.88 |
| W | 1.25 | 1.75 | 1.75 |
| T/W (β) | 200% | 91% | 50% |
| Maximum strain (ε) | 105% | 165% | 232% |

Each of these sealing members was attached to lithium-ion batteries at a compression rate of 52.5% in accordance with the following evaluation method. After attached and then detached, it was observed whether or not cracking developed in the sealing member. A sealing member with no cracking or cracks found in the surface thereof was rated as **O**; and a sealing member with cracking or cracks found in the surface thereof was rated as ×. Here, 10 samples were tested. Table 4 shows the results.

[Table 4]

| No. | Sealing member 1 | Sealing member 2 | Sealing member 3 |
|---|---|---|---|
| 1 | ○ | ○ | ○ |
| 2 | ○ | ○ | ○ |
| 3 | ○ | ○ | ○ |
| 4 | ○ | ○ | ○ |
| 5 | ○ | ○ | ○ |
| 6 | ○ | ○ | ○ |
| 7 | ○ | ○ | ○ |
| 8 | ○ | ○ | ○ |
| 9 | ○ | ○ | × |
| 10 | ○ | ○ | × |

It is considered from the contents of the results of Examples described above that a sealing member having a suitable shape based on the calculation formulas of the present disclosure can also be obtained by the theory based on the same method even when a material other than the elastomer used in Examples is used.

Industrial Applicability

The sealing member of the present disclosure can be used for a battery including a non-aqueous electrolytic solution.

Reference Signs List

1 Battery container and lid
2 Electrode terminal
3 Sealing member
4 Non-aqueous electrolytic solution
5 Member A
6 Member B (before compression)
6' Member B (after compression)
7 Sealing member (before compression)
7' Sealing member (after compression)

## Claims

1. A sealing member for a battery including a non-aqueous electrolytic solution, wherein

   a material constituting the sealing member comprises an elastic material,
   a compression rate R of the sealing member when attached is 50% or more, and
   the sealing member satisfies

$$Eb \geq a \times \beta^{b}$$

   where Eb is an elongation at break of the material constituting the sealing member as measured in accordance with JIS K 6251, $\beta$ is a cross-sectional aspect ratio, $a = 6.919 \times R - 2.066$, and $b = 2.278 \times R - 1.767$.

2. The sealing member according to claim 1, wherein the sealing member has a circular ring shape with a rectangular cross-section.

3. The sealing member according to claim 1 or 2, wherein T satisfies $0.4\ mm \leq T \leq 3.5\ mm$.

4. The sealing member according to claim 1 or 2, where W satisfies $0.4\ mm \leq W \leq 3.5\ mm$.

5. The sealing member according to claim 1, 2, 3, or 4, wherein the compression rate is 52% or more.

6. The sealing member according to any one of claims 1 to 4, wherein the elastic material is a fluoroelastomer.

7. The sealing member according to any one of claims 1 to 5, wherein the elastic material is an elastomer containing a vinylidene fluoride unit.

8. The sealing member according to claim 6, wherein the sealing member satisfies

$$3.0 \geq a \times \beta^{b}$$

   where $a = 6.919 \times R - 2.066$ and $b = 2.278 \times R - 1.767$.

9. The sealing member according to any one of claims 1 to 7, wherein the battery including a non-aqueous electrolytic solution is a lithium-ion battery.

10. The sealing member according to any one of claims 1 to 8, wherein the battery is a rectangular battery.

11. A battery including a non-aqueous electrolytic solution, comprising the sealing member according to any one of claims 1 to 9.

Figure1

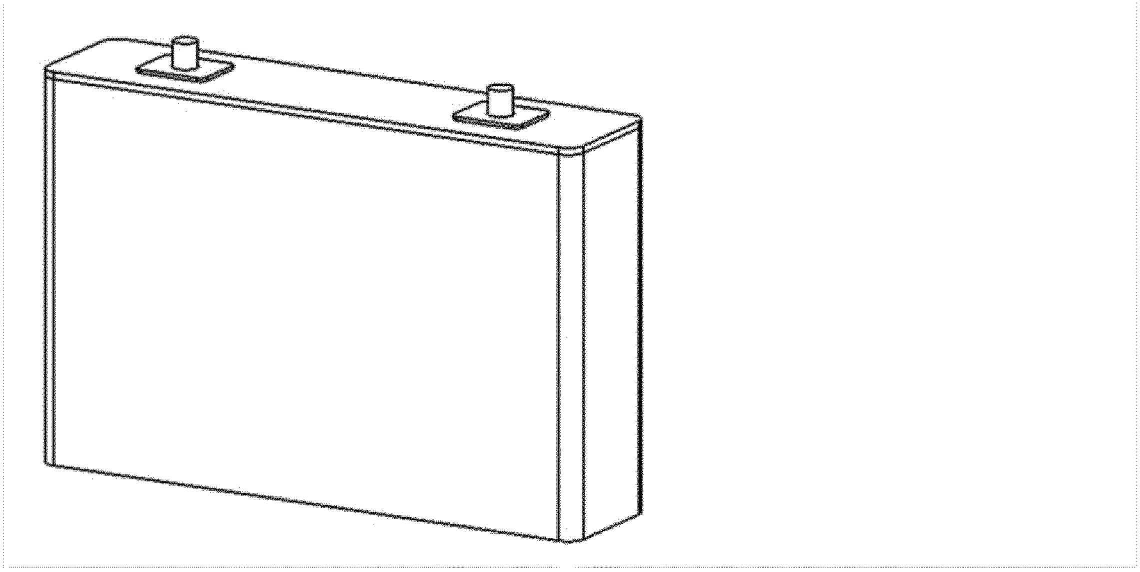

Figure2

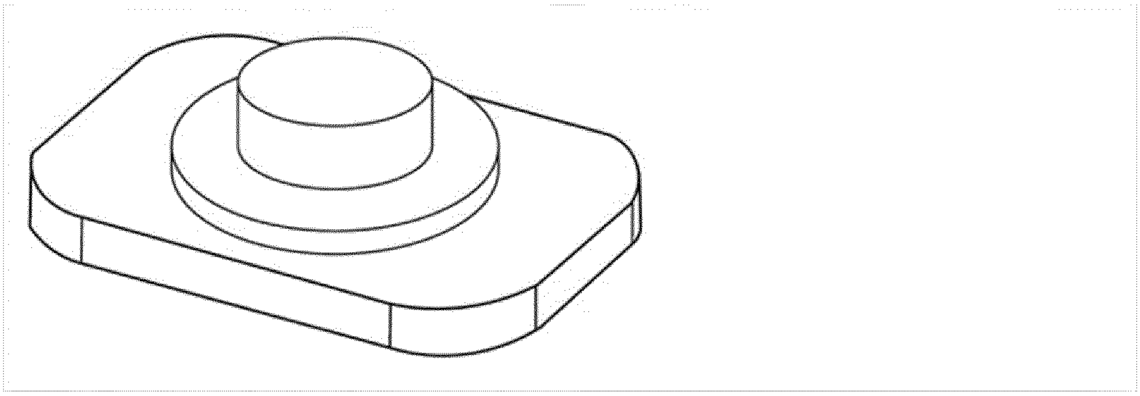

Figure3

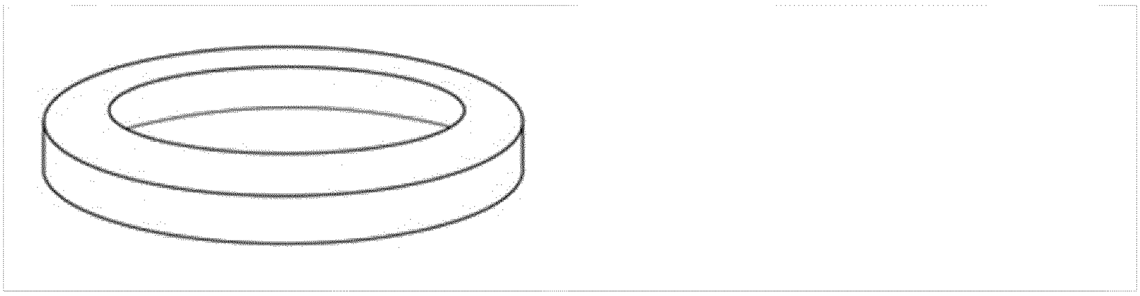

Figure4

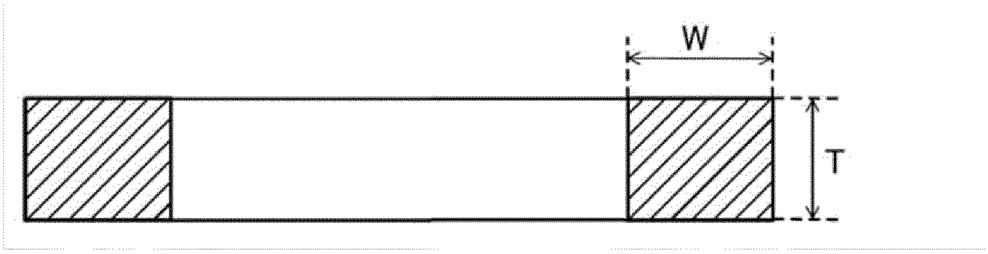


Figure5

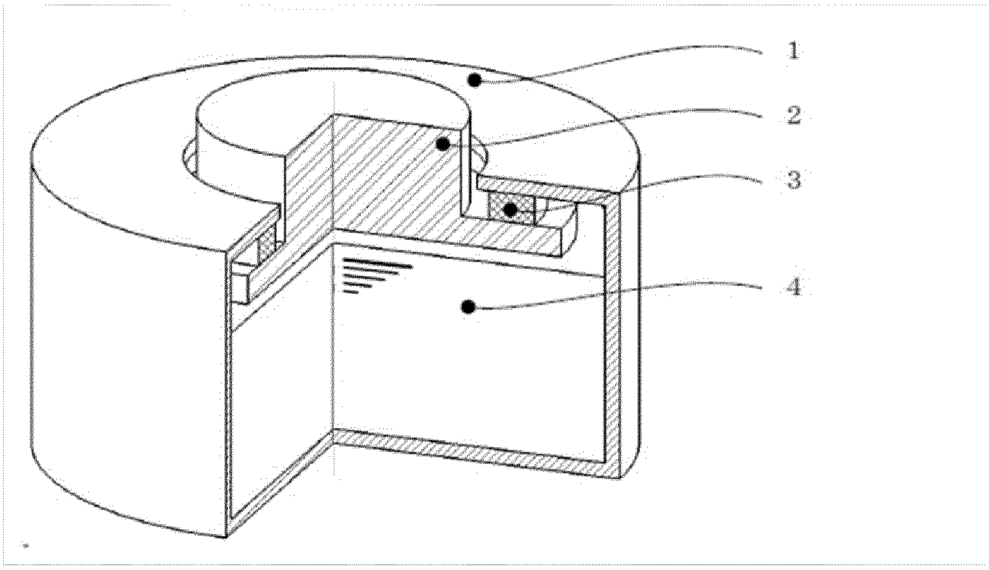


Figure 6

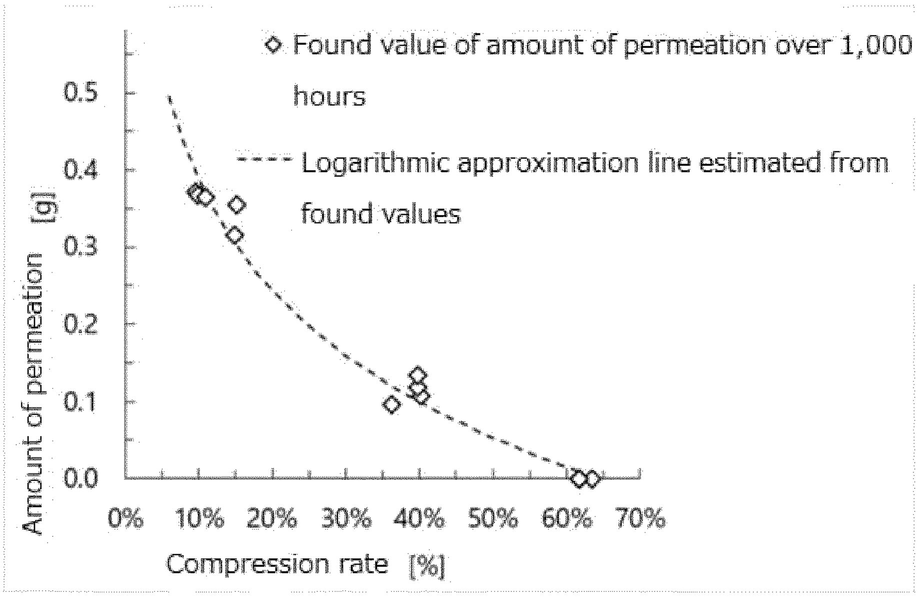

Figure7

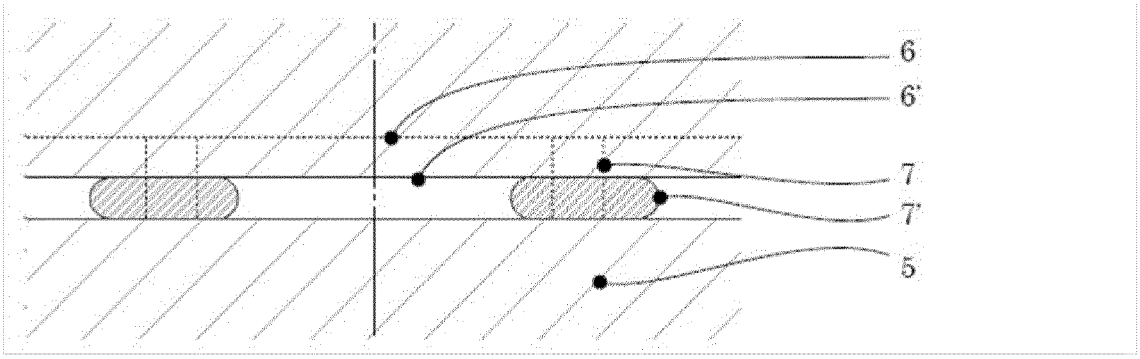


Figure8

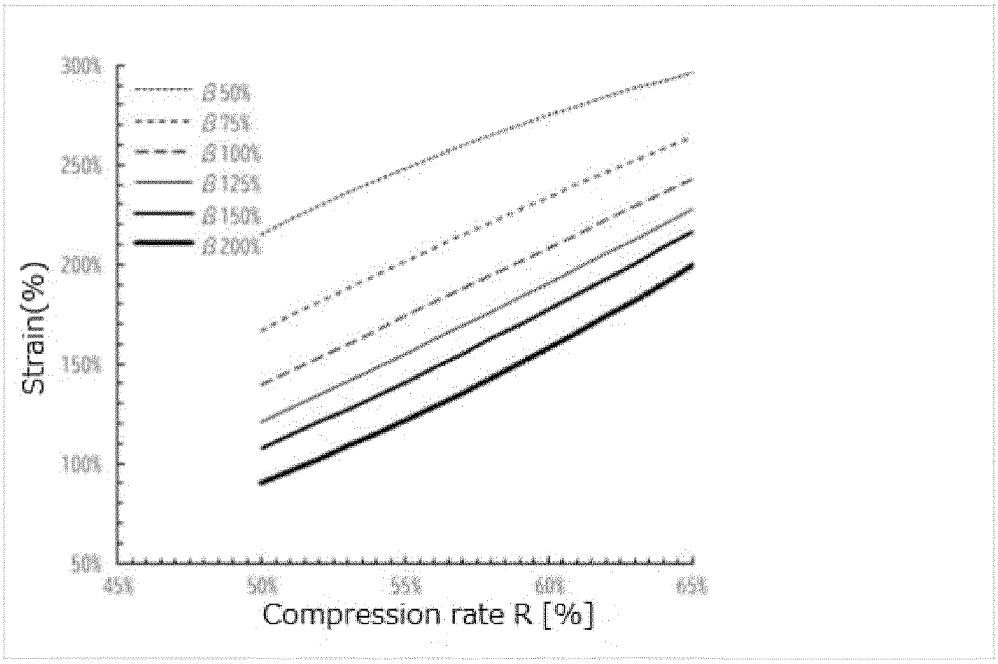

Figure9

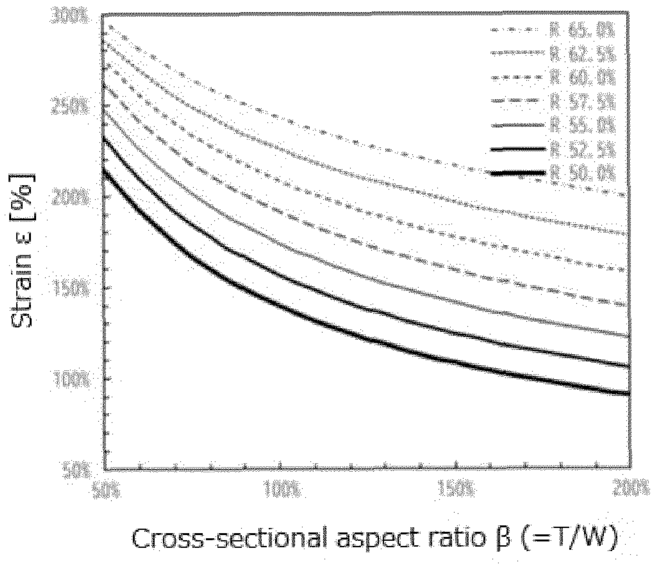
R 65.0%
R 62.5%
R 60.0%
R 57.5%
R 55.0%
R 52.5%
R 50.0%
Strain ε [%]
300%
250%
200%
150%
100%
50%
50%
100%
150%
200%
Cross-sectional aspect ratio β (=T/W)

**INTERNATIONAL SEARCH REPORT**

International application No.
**PCT/JP2022/002408**

**A. CLASSIFICATION OF SUBJECT MATTER**

***F16J 15/10***(2006.01)i; ***H01M 50/183***(2021.01)i
FI: H01M50/183; F16J15/10 C; F16J15/10 G

According to International Patent Classification (IPC) or to both national classification and IPC

**B. FIELDS SEARCHED**

Minimum documentation searched (classification system followed by classification symbols)

F16J15/10; H01M50/183

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2020/251055 A1 (DAIKIN INDUSTRIES, LTD.) 17 December 2020 (2020-12-17) claim 1, paragraphs [0088], [0089], table 1 | 1, 5-9, 11 |
| Y | | 2-4, 10 |
| Y | WO 2015/129866 A1 (DAIKIN INDUSTRIES, LTD.) 03 September 2015 (2015-09-03) paragraph [0019], fig. 1 | 2-4 |
| A | | 1, 5-11 |
| Y | WO 2020/137372 A1 (SANYO ELECTRIC CO., LTD.) 02 July 2020 (2020-07-02) paragraph [0008] | 10 |
| A | WO 2020/251056 A1 (DAIKIN INDUSTRIES, LTD.) 17 December 2020 (2020-12-17) entire text, all drawings | 1-11 |
| A | JP 2013-177574 A (DAIKIN INDUSTRIES, LTD.) 09 September 2013 (2013-09-09) entire text, all drawings | 1-11 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 March 2022** | **29 March 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/002408**

| Patent document cited in search report | Publication date (day/month/year) | Patent family member(s) | Publication date (day/month/year) |
|---|---|---|---|
| WO 2020/251055 A1 | 17 December 2020 | (Family: none) | |
| WO 2015/129866 A1 | 03 September 2015 | KR 10-2016-0119202 A | |
| | | CN 106068413 A | |
| WO 2020/137372 A1 | 02 July 2020 | (Family: none) | |
| WO 2020/251056 A1 | 17 December 2020 | (Family: none) | |
| JP 2013-177574 A | 09 September 2013 | CN 103946250 A | |
| | | KR 10-2014-0117544 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001126684 A
- JP 2000030675 A
- WO 9724381 A
- JP S6157324 B
- JP H481608 B
- JP H513961 B